(19) **Europäisches Patentamt / European Patent Office / Office européen des brevets**

(11) **EP 1 346 296 B1**

(12) **EUROPEAN PATENT SPECIFICATION**

(45) Date of publication and mention
of the grant of the patent:
**19.09.2012 Bulletin 2012/38**

(51) Int Cl.:
**G06F 17/30** (2006.01)

(21) Application number: **01992199.8**

(22) Date of filing: **19.12.2001**

(86) International application number:
**PCT/US2001/049260**

(87) International publication number:
**WO 2002/054289 (11.07.2002 Gazette 2002/28)**

(54) **LOSSY INDEX COMPRESSION**

VERLUSTBEHAFTETE INDEXKOMPRESSION

COMPRESSION D'INDICE AVEC PERTE

(84) Designated Contracting States:
**AT BE CH CY DE DK ES FI FR GB GR IE IT LI LU MC NL PT SE TR**

(30) Priority: **29.12.2000 US 258991 P**

(43) Date of publication of application:
**24.09.2003 Bulletin 2003/39**

(73) Proprietor: **International Business Machines Corporation**
**Armonk, NY 10504 (US)**

(72) Inventors:
- **CARMEL, David**
**34816 Haifa (IL)**
- **COHEN, Doron**
**20103 Leshem (IL)**
- **FAGIN, Ronald**
**Los Gatos, CA 95032 (US)**
- **FARCHI, Eitan**
**37052 Pardes Hanna (IL)**
- **HERSCOVICI, Michael**
**Haifa 32922 (IL)**
- **MAAREK, Yoelle**
**34995 Haifa (IL)**
- **SOFFER, Aya**
**34333 Haifa (IL)**

(74) Representative: **Williams, Julian David**
**IBM Research GmbH**
**Zurich Research Laboratory**
**Säumerstrasse 4**
**Postfach**
**8803 Rüschlikon (CH)**

(56) References cited:
WO-A-97/49048     US-A- 5 867 799
US-A- 5 915 249     US-A- 6 163 782
US-B1- 6 332 138

- "INVERTED INDEX" INTERNET, [Online] 15 September 1999 (1999-09-15), pages 1-31, XP002480543 Retrieved from the Internet: URL: http://ir.iit.edu/~dagr/IRCourse/Notes /02%20Inverted%20Index.ppt> [retrieved on 2008-05-14]
- TOMASIC A ET AL: "Performance of inverted indices in shared-nothing distributed text document information retrieval systems" PARALLEL AND DISTRIBUTED INFORMATION SYSTEMS, 1993., PROCEEDINGS OF TH E SECOND INTERNATIONAL CONFERENCE ON SAN DIEGO, CA, USA 20-22 JAN. 1993, LOS ALAMITOS, CA, USA,IEEE COMPUT. SOC, US, 20 January 1993 (1993-01-20), pages 8-17, XP010031709 ISBN: 978-0-8186-3330-0
- David Hawking: "Efficiency/Effectiveness Trade-offs in Query Processing", from Theory into Practice Workshop, 1998 SIGIR Conf., 31 October 1998 (1998-10-31), pages 16-22, XP55019333, Retrieved from the Internet: URL:http:// delivery.acm.org/10.1145/310000 /305119/p16-hawking.pdf?ip=145.64.134.242& acc=ACTIVE%20SERVICE&CFID=66241776&CF TOKEN =38284250&__acm__ =1329222596_065fade8997fc 87471b86915ac3149b9 [retrieved on 2012-02-14]

**Description**

**Technical Field**

The present invention relates generally to methods and systems for computerized searching in large bodies of textual data, and specifically to creating search indices.

**Background Art**

Fast and precise text search engines are widely used in web and desktop applications. Emerging hand-held devices such as the Palm Pilot™ possess enough storage capacity to allow entire moderate-size document collections to be stored on the device for quick reference and browsing purposes. Equipping these devices with advanced index-based search capabilities is desired, but storage on hand-held devices is still rather limited.

Most advanced information retrieval (IR) applications create an inverted index in order to support high quality search services over a given collection of documents. An example of such a system is the Guru search engine, which is described by Maarek and Smadja in "Full text indexing based on lexical relations, an application: Software libraries", Proceedings of the Twelfth Annual International ACM SIGIR Conference on Research and Development in Information Retrieval, pages 198-206 (1989), which is incorporated herein by reference. Each document in the document collection is analyzed and represented by a vector profile of indexing units, or terms, based on the content of the document. A term might be a word, a pair of closely related words (lexical affinities), or a phrase. Each term in a document is stored in an index with an associated posting list.

A posting list comprises postings, wherein each posting comprises an identifier of a document containing the term, a score for the term in that document, and possibly some additional information about the occurrences of the term in the document, such as the number of occurrences and offsets of the occurrences. A typical scoring model used in many information retrieval systems is the tf-idf formula, described by Salton and McGill in An Introduction to Modern Information Retrieval, (McGraw-Hill, 1983), which is incorporated herein by reference. The score of term *t* for document *d* depends on the term frequency of *t* in d (tf), the length of document *d*, and the inverse of the number of documents containing *t* in the collection (idf).

An exemplary tf-idf formula is described by Chris Buckley, et al., in "New retrieval approaches using SMART: TREC 4," Proceedings of the Fourth Text Retrieval Conference (TREC- 4), pp. 25-48 (Gaithersberg, Maryland, November 1995), which is incorporated herein by reference. This formula provides that the score $A(t, d)$ of document *d* for term *t* is

$$A(t, d) = \frac{\log(1 + tf)}{\log(1 + avg_{tf})} * \log\left(N/N_t\right)\Big/|d|$$

Here $avg_{tf}$ is the average term frequency in document *d, N* is the number of documents in the collection, $N_t$ is the number of documents containing term *t*, and $|d|$ is the length of document *d*. Usually, $|d|$ is approximated by the square root of the number of (unique) terms in *d*.

At search time, terms are extracted from a user's query, and their respective posting lists are retrieved from the inverted index. The document posting scores are accumulated to form document scores by summing the scores of postings pertaining to the same document. At the end of this process, the documents are sorted by their scores, and the documents with the top scores are returned.

Indexing a large document collection results in huge index files that are hard to maintain. There has been a large amount work in the field of index compression, resulting in smaller index files. Two complementary approaches exist in the art. One approach is compression at the data structure level, that is, retaining all index data while trying to obtain a more compact representation of posting lists. The other approach is pruning the index by deleting or combining terms, such as stop-word omission, and Latent Semantic Indexing (LSI). The primary goal of this sort of index pruning is to reduce "noise" in the indexing system by removing from the index terms that tend to reduce search precision, but its practical effect of reducing index size is very relevant to the subject of index compression.

In stop-word omission, language statistics are used to find words that occur so frequently in the language that they will inevitably occur in most documents. Words that are very frequent in the language (stop-words) are ignored when building an inverted index. Words such as "the" and "is" do not contribute to the retrieval task. The TREC collection, as presented in "Overview of the Seventh Text Retrieval Conference (TREC-7)," *Proceedings of the Seventh Text Retrieval Conference (TREC-7)* (National Institute of Standards and Technology, 1999), which is incorporated herein by reference, enumerates the frequency of words in common text documents. Ignoring the set of the 135 most frequent words in the TREC collection was found to remove about 25% of the postings (Witten, et al., Managing Gigabytes, Morgan Kaufman Publishers, San Francisco, California, 1999, which is incorporated herein by reference).

Latent Semantic Indexing (LSI) is described, for example, by Deerweester, et al., in "Indexing by Latent Semantic Analysis", Journal of the American Society for Information Science, Vol. 41, No. 1, (1990), pp. 391-407, which is incorporated herein by reference. LSI represents the inverted index as a product of three matrices, using a statistical technique called "singular-value decomposition" (SVD). This representation enables the number of terms in the index to be reduced by keeping the most significant terms while removing all others. Both LSI and stop-word omission operate at the granularity of terms. In other words, they only enable pruning entire terms from the index, so that once pruned, the term no longer appears in the index at all. When a term is pruned, its entire posting list is removed from the index.

Dynamic pruning techniques decide during the document ranking process, after the index has already been created, whether certain terms or document postings are worth adding to the accumulated document scores, and whether the ranking process should continue or stop. An exemplary technique of this sort is described by Persin, "Document Filtering for Fast Ranking", Proceedings of the 17th Annual International ACM-SIGIR Conference on Research and Development in Information Retrieval (Dublin, Ireland, July 1994, Special Issue of the SIGIR Forum), pages 339-348, which is incorporated herein by reference. The dynamic techniques are applied for a given query, thus reducing query time. Dynamic techniques have no effect on the index size, since they are applied to an already-stored index.

David Mawking: "Efficiency/Effectiveness Trade-offs in Query Processing", from theory into Prative workshop, 1998 SIGIR conf., 31 october 1998, pages 16-22, discloses an indexing technique with pruning of index entries.

WO 97/49048 discloses a search engine for retrieving documents pertinent to query indexes documents in accordance with hyperlinks pointing to those documents. The indexer traverses the hypertext database and finds hypertext informaiton including the address of the document the hyperlinks point to and the anchor text of each hyperlink. The information is stored in an inverted index file, which may also be used to calculate document link vectors for each hyperlink pointing to a particular document.

**Disclosure of Invention**

In preferred embodiments of the present invention, an inverted index relating terms to documents in a collection is pruned at the granularity level of document postings, rather than at term-level granularity, as in systems known in the art. By appropriate selection of the postings to prune for a given term, as described hereinbelow, the size of the index can be substantially reduced without significantly affecting the search accuracy of the index from a user's point of view.

Preferably, metrics are determined for the document postings and are then applied in order to select the postings to remove from the inverted index. The metrics are applied in such a manner that when a user searches the compressed inverted index with a given query, the list of documents returned is substantially the same as the list of top-ranked documents returned by the same query in the unpruned index. The pruning methods of the present invention are lossy, since some document postings are removed from the index, as opposed to methods known in the art that compress the index by using compact data structures and representations for storing the data in the posting list. Lossy and non-lossy methods can complement each other. After pruning the index in a lossy fashion, the index can be further compressed in a non-lossy manner, thereby attaining a smaller index size than is possible with either one of the methods used alone.

There is therefore provided, according to a first aspect, apparatus for indexing a corpus of text documents, the apparatus comprising an index processor which is arranged to: create an inverted index of entries for terms appearing in the plurality of documents, each entry including a term present in one or more of the documents and at least one document posting, each document posting comprising an identifier of a document containing the term and a ranking that represents a rank of the term in the document; and compress the inverted index by deleting a document posting having a ranking below a given level in the ranking, wherein the processor is arranged to select the postings to prune based on information on a statistical distribution of queries in a search space with respect to the document postings.

Pruning the index may include receiving at least one parameter from a user and setting the given level based on the parameter and the index ranking.

The at least one parameter may include a number $M$ of the scores to remain in the pruned inverted index.

Preferably, selecting the postings includes determining a probability of at least some of the terms and multiplying the posting scores for each of the at least some of the terms by the probability of the term, and ranking the index includes ranking all the postings by multiplied posting scores, and the given level includes the score of document $M$ from the top of the ranking

In a preferred embodiment, creating the index includes creating the index on a computer with large memory capacity and transferring the index after pruning to a device with limited memory capacity.

Preferably, the limited memory device includes a handheld computing device.

According to a second aspect, there is provided a method for indexing a corpus of text documents, the method comprising the steps of: creating an inverted index of entries for terms appearing in the plurality of documents, each entry including a term present in one or more of the documents and at least one document posting, each document posting comprising an identifier of a document containing the term and a ranking that represents a rank of the term in the document; and compressing the inverted index by deleting a document posting having a ranking below a given level in the ranking, wherein the processor is arranged to select the postings to prune based on information on a statistical distribution of queries in a search space with respect to the document postings. The present invention is defined in claims 1-13.

## Brief Description of Drawings

The present invention will be more fully understood from the following detailed description of the preferred embodiments thereof, taken together with the drawings in which:

Fig. 1 is a schematic, pictorial illustration of a system for creating a search index, in accordance with a preferred embodiment of the present invention;

Fig. 2 is a flow chart that schematically illustrates a method for compressing indices, in accordance with a preferred embodiment of the present invention; and

Fig. 3 is a flow chart that schematically shows details of a technique for inputting pruning parameters used in the method of Fig. 2, in accordance with a preferred embodiment of the present invention.

## Best Mode for Carrying Out the Invention

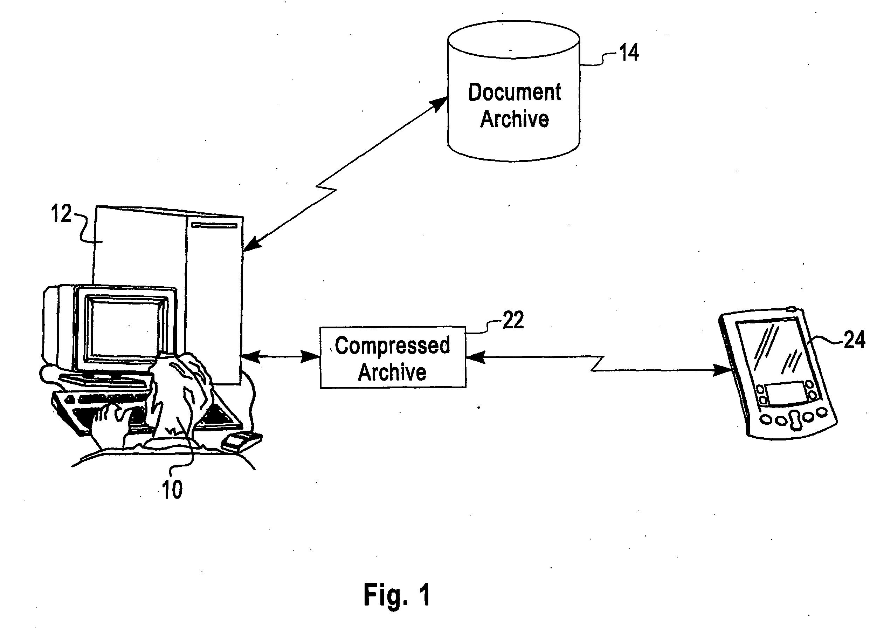

Fig. 1 is a schematic, pictorial illustration of a system for creating a compressed search index, in accordance with a preferred embodiment of the present invention. A user 10 uses an index processing device 12 to access a document archive 14. Documents retrieved from document archive 14 may be combined with an existing document archive on device 12. Device 12 creates a compressed inverted index 22 of the archive, using methods described in detail hereinbelow. Typically, the compressed index or archive 22 is transferred to a computing device 24. Device 24 is distinguished from device 12 by its limited ability to store large indices. Preferably the document archive used to create the index is transferred to device 24, as well. The user can then use device 24 to formulate queries into the document archive and to retrieve a list of appropriate documents, despite the limited storage capability of device 24.

Typically, device 12 comprises a desktop computer or server, while device 24 is a portable, pervasive device, such as a palm device or handheld computer, as shown in the figure. Alternatively, however, device 24 may comprise a desktop computer or other computer workstation.

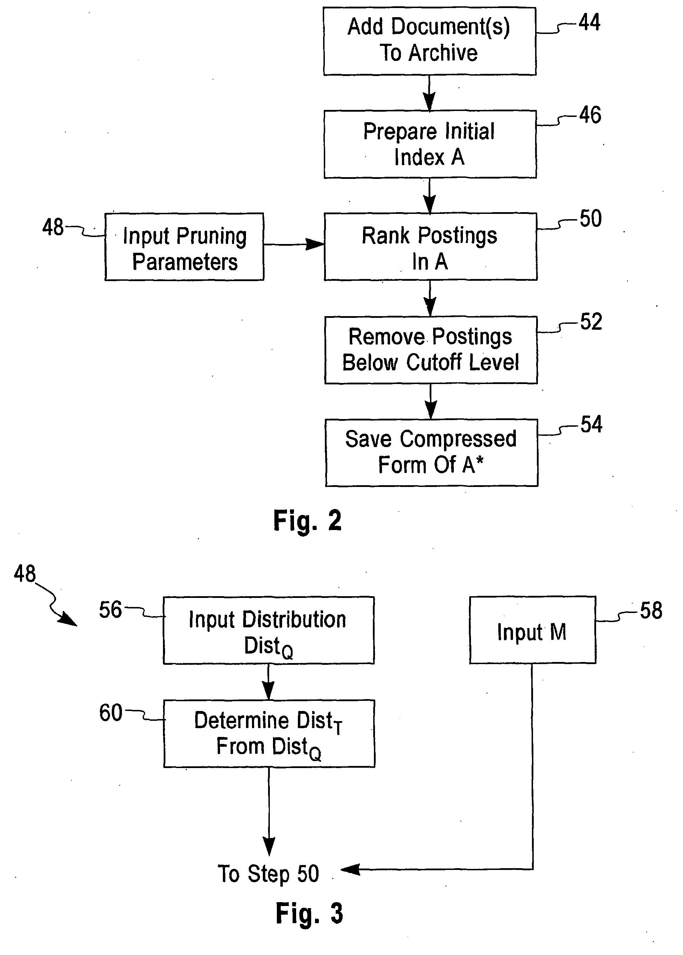

Fig. 2 is a flow chart that schematically illustrates a method for creating compressed inverted index 22, in accordance with a preferred embodiment of the present invention. The steps of this method are preferably carried out by suitable software running on device 12. The software may be supplied to device 12 in electronic form, by downloading over a network, or it may alternatively be supplied on tangible media, such as CD-ROM or non-volatile memory.

User 10 creates document archive 14 or adds documents to an existing archive at a document adding step 44. The index compression software creates an initial index A, at an index preparation step 46, by extracting terms from each document, creating a document posting for each term in each document, and listing the document postings in the index, as is known in the art.

Each document posting has a score associated with it, as described in the Background Art section. Various manners of calculation of the score are known in the art, and the manner chosen is not essential to the present invention. Rather, it is sufficient that $A(t, d) = 0$ if $t$ is not in $d$, $A(t, d) > 0$ otherwise.

The user then inputs pruning parameters at a parameter input step 48. The parameters are used to rank the postings in index A at an index-ranking step 50.

A cutoff level in the rankings of the postings is determined that satisfies the conditions of the pruning parameters. All postings ranked below the cutoff level for a given term are deleted from index A. In this manner, a compressed index, referred to as index A*, is created at a posting removal step 52. This index may be further reduced in size by methods of term pruning and data structure compression known in the art, such as the methods described in the Background of the Invention. The compressed version of the index A* is stored as compressed index 22, at a index storage step 54.

The compressed index A* is, from the user's point of view, identical to the original index A. When the user queries either index A or A*, he receives a list of documents that are ranked according to their relevance to the query terms, based on the posting lists of the terms. By appropriate choice of pruning parameters at step 48 and application of the parameters at steps 50 and 52, it is assured that the list of documents returned by A* in response to the query, and the order of the documents in the list, will be substantially identical to the top of the list returned by A. This is generally the only part of the list that is of interest to users. In this sense, the methods of the present invention are analogous to methods of lossy compression of images and sound, wherein substantial reduction of data volume is achieved by sacrificing details that are, for the most part, imperceptible to the user.

Three preferred methods for specifying input parameters (step 48) and applying the parameters (steps 50 and 52) will now be described. The first two methods delete as many document postings as possible, while keeping the top answers returned by the pruned index in response to queries as close as possible to the top answers that would be returned by the original index. The closeness is measured using a top-answers metric that is determined by the similarity between the set of top results returned by the original index to the set of top results returned by the pruned index.

The third method, a uniform document posting pruning method, removes as many document postings as necessary to achieve a given index size, while keeping an expected error as small as possible. The expected error is measured using a metric which is defined as the sum over all possible queries of the differences between the document scores returned by the original and compressed indices for each query.

The compressed index is defined as identical to the original index if, for any given query, both return identical "top answers" to the query. Two of the examples the invention derive from two possible measures for "top answers":

- The "$k$-top answers" method defines the "top answers" as the $k$ documents with the highest scores for a query, wherein $k$ is input at step 48. Define $r$ as the maximum allowable number of terms in any query. For each term $t$, the values $A(t, d_0)$, $A(t, d_1)$, ..., are ranked according to their magnitudes at step 50. Let $z_t$ be the magnitude of the $k$'th term in the ranking. Then at step 52, $A^*(t, d)$ is set to 0 if $A(t, d) < z_t/r$, while $A^*(t, d) = A(t, d)$ otherwise. Postings for which $A^*(t, d) = 0$ are, of course, removed from the index.

- The "$\delta$-top answers" method defines the "top answers" in terms of a threshold on the distance from the top score of the scoring function for a given query, wherein $\delta$ is input at step 48. For instance, for $\delta = 0.9$, any document with a higher score than 90% of the top score is regarded as a top answer. Here, too, the values of $A(t, d)$ are ranked at step 50. At step 52, for each term $t$, the maximum value $\max(A(t, d))$ is found. Let $z_t = \delta * \max(A(t, d))$. Then $A^*(t, d) = 0$ if $A(t, d) < z_t/r$ and $A^*(t, d) = A(t, d)$ otherwise. Postings for which $A^*(t, d) = 0$ are, of course, removed from the index.

Fig. 3 expands pruning parameter input step 48 for the third, uniform posting pruning method noted above. An external process determines the probability distribution of the set of all possible queries $Dist_q$, at a distribution input to the system at the pruning parameter input step 55. $Dist_q$ can be obtained, for example, from the distribution of terms in the language, from a query log file of a search engine, or from any other suitable method. The distribution of the terms in the index $Dist_t$ is induced from the queries and $Dist_q$ at a determination step 56. The term distribution reflects the probability that a term $t$ will appear in a query submitted to the search engine. The probability of a term appearing can be expressed in terms of query probabilities as $\Pr(t) = \Sigma_{q\,in\,Q,\,t\,in\,q} \Pr(q)$ where Q is the set of all possible queries. The user inputs a desired number of postings $M$ to preserve in the index $A^*$ at an input step 58. Then the third example of index compression ranks the values of $A$ are ranked at step 50, and $A^*$ is created at step 52 as follows. First, a scoring index $A'$ is created based on $A$ and $Dist_t$: $A'(t, d) = \Pr(t)A(t, d)$. All the scores in $A'$ are ranked, and $z$ is determined so that there are exactly $M$ scores in $A'$ greater than $z$. Note that in this method, $z$ is a global parameter over $A'$, rather than per term $t$ as in the first two methods described above. Then $A^*(t, d) = 0$ if $A'(t, d) < z$ and $A^*(t, d) = A(t, d)$ otherwise.

The inventors have tested these three methods on empirical data using the Los-Angles Times data given in TREC, which contains about 132,000 documents. In order to improve the method performance, the original index was modified. For each term, the minimum score in all the document postings for that term was subtracted from all the other scores. After this correction to the methods described above, the top-$k$ pruning method allowed pruning of up to 25% of the document postings without significantly degrading search results, using the top 10 scores per term and queries of ten terms or less. The top-$\delta$ pruning method allowed pruning of up to 20% of the document postings without significantly degrading search results, using the top 70% of the scores per term and queries of ten terms or less. Both the top-$k$ and the top-$\delta$-methods performed better than the uniform posting pruning method for the document archive chosen.

## Industrial Applicability

The invention is capable of exploitation in industry by providing, for example, apparatus for indexing a corpus of text documents including an index processor which is arranged to create an inverted index of terms appearing in the documents, the index including postings of the terms in the documents, the processor being further arranged to create rankings of the postings in the index, and prune from the index the postings below a given level in the ranking.

The invention may also be made and used by providing, in accordance with a preferred embodiment, a computer software product for indexing a corpus of text documents, including a computer-readable medium in which program instructions are stored, which instructions, when read by a computer, cause the computer to create an inverted index of terms appearing in the documents, the index including postings of the terms in the documents, the instructions further cause the computer to rank the postings in the index, and prune from the index the postings below a given level in the ranking.

It will be appreciated that the preferred embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

**Claims**

1. Apparatus for indexing a corpus of text documents (14), the apparatus comprising an index processor which is arranged to:

   create an inverted index of entries for terms appearing in the plurality of documents, each entry including a term present in one or more of the documents and at least one document posting, each document posting comprising an identifier of a document containing the term and a ranking that represents a rank of the term in the document (46, 50); and
   compress the inverted index by deleting a document posting having a ranking below a given level in the ranking (52, 54), **characterized in that** the processor is arranged to select the postings to prune based on information on a statistical distribution of queries in a search space with respect to the document postings.

2. Apparatus according to claim 1, further **characterized by** a user interface for receiving at least one parameter, wherein the processor is arranged to set the given level based on the parameter and the index ranking.

3. Apparatus according to claim 2, wherein the at least one parameter comprises a number $M$ of the scores to remain in the pruned inverted index.

4. Apparatus according to claim 3, wherein the processor is arranged to determine a probability of at least some of the terms and to multiply the posting scores for each of the at least some of the terms by the probability of the term, and to rank all the postings by the multiplied posting scores, and wherein the given level comprises the score of document $M$ from the top of the ranking.

5. Apparatus according to any preceding claim, wherein the index processor comprises a computer having large memory capacity, and comprising apparatus for transferring the index after pruning to a device with limited memory capacity.

6. Apparatus according to claim 5, wherein the device with limited memory capacity comprises a handheld computing device.

7. A method for indexing a corpus of text documents (14), the method comprising the steps of:

   creating an inverted index of entries for terms appearing in the plurality of documents, each entry including a term present in one or more of the documents and at least one document posting, each document posting comprising an identifier of a document containing the term and a ranking that represents a rank of the term in the document (46, 50); and
   compressing the inverted index by deleting a document posting having a ranking below a given level in the ranking (52, 54), **characterized in that** the processor is arranged to select the postings to prune based on information on a statistical distribution of queries in a search space with respect to the document postings.

8. The method according to claim 7, further **characterized by** the steps of receiving at least one parameter and setting the given level based on the parameter and the index ranking.

9. The method according to claim 8, wherein the at least one parameter comprises a number $M$ of the scores to remain in the pruned inverted index.

10. The method according to claim 9, comprising:

determining a probability of at least some of the terms;
multiplying the posting scores for each of the at least some of the terms by the probability of the term; and
ranking all the postings by the multiplied posting scores, and wherein the given level comprises the score of document *M* from the top of the ranking.

**11.** The method according to any of claims 7 to 10 comprising:

transferring the index after pruning from a computer having a large memory capacity to a device with limited memory capacity.

**12.** The method according to claim 11, wherein the device with limited memory capacity comprises a handheld computing device.

**13.** A computer program comprising program code means adapted to perform the method of any of claims 7 to 12 when said program is run on a computer.

**Patentansprüche**

**1.** Vorrichtung zum Indexieren einer Sammlung von Textdokumenten (corpus oft text documents) (14), wobei die Vorrichtung einen Indexprozessor umfasst, der geeignet ist zum:

Erzeugen eines invertierten Index aus Einträgen für Begriffe, die in der Vielzahl von Dokumenten auftreten, wobei jeder Eintrag einen Begriff beinhaltet, der in einem oder mehreren der Dokumente und wenigstens einem Dokumentenbeitrag (document posting) auftritt, wobei jeder Dokumentenbeitrag einen Bezeichner eines Dokumentes, das den Begriff enthält, und eine Rangordnung umfasst, die die Rangstufe des Begriffs in dem Dokument (46, 50) wiedergibt; und
Komprimieren des invertierten Index durch Löschen eines Dokumentenbeitrags mit einer Einstufung unterhalb einer vorgegebenen Rangstufe in der Rangordnung (52, 54), **dadurch gekennzeichnet, dass** der Prozessor geeignet ist, die Beiträge zum Bereinigen auf der Grundlage von Daten einer statistischen Verteilung von Anfragen in einem Suchraum mit Bezug auf die Dokumentenbeiträge auszuwählen.

**2.** Vorrichtung nach Anspruch 1, ferner **gekennzeichnet durch** eine Benutzerschnittstelle zum Empfangen wenigstens eines Parameters, wobei der Prozessor zum Festlegen der vorgegebenen Rangstufe auf der Grundlage des dem Parameters und der Indexrangordnung geeignet ist.

**3.** Vorrichtung nach Anspruch 2, wobei der wenigstens eine Parameter eine Anzahl M der Bewertungen zum Verbleiben in dem bereinigten invertierten Index umfasst.

**4.** Vorrichtung nach Anspruch 3, wobei der Prozessor zum Festlegen einer Wahrscheinlichkeit von wenigstens einigen Begriffen, zum Multiplizieren der Beitragsbewertungen für jeden der wenigstens einigen Begriffe mit der Wahrscheinlichkeit des Begriffs und zum Einstufen aller Beiträge durch die multiplizierten Beitragsbewertungen geeignet ist, und wobei die vorgegebene Rangstufe die Bewertung des Dokuments M ab der Spitze der Rangordnung umfasst.

**5.** Vorrichtung nach einem vorangehenden Anspruch, wobei der Indexprozessor einen Computer mit großer Speicherkapazität und eine Vorrichtung zum Übertragen des Index nach dem Bereinigen an eine Einheit mit begrenzter Speicherkapazität umfasst.

**6.** Vorrichtung nach Anspruch 5, wobei die Einheit mit begrenzter Speicherkapazität eine tragbare Datenverarbeitungseinheit umfasst.

**7.** Verfahren zum Indexieren einer Sammlung von Textdokumenten (14), wobei das Verfahren die folgenden Schritte umfasst:

Erzeugen eines invertierten Index von Einträgen für Begriffe, die in der Vielzahl von Dokumenten auftreten, wobei jeder Eintrag einen Begriff beinhaltet, der in einem oder mehreren der Dokumente und wenigstens einem Dokumentenbeitrag auftritt, wobei jeder Dokumentenbeitrag einen Bezeichner eines Dokuments, das den Begriff enthält, und eine Rangordnung umfasst, die die Rangstufe des Begriffs in dem Dokument (46, 50) wiedergibt; und

Komprimieren des invertierten Index durch Löschen eines Dokumentenbeitrags mit einer Einstufung unterhalb einer vorgegebenen Rangstufe in der Rangordnung (52, 54), **dadurch gekennzeichnet, dass** der Prozessor geeignet ist, die Beiträge zum Bereinigen auf der Grundlage einer statistischen Verteilung von Abfragen in einem Suchraum mit Bezug auf die Dokumentenbeiträge auszuwählen.

8. Verfahren nach Anspruch 7, ferner **gekennzeichnet durch** die Schritte des Empfangens von wenigstens einem Parameter und des Festlegens der vorgegebenen Rangstufe auf der Grundlage des Parameters und der Indexrangordnung.

9. Verfahren nach Anspruch 8, wobei der wenigstens eine Parameter eine Anzahl M von Bewertungen zum Verbleiben in dem bereinigten invertierten Index umfasst.

10. Verfahren nach Anspruch 9, das Folgendes umfasst:

Ermitteln einer Wahrscheinlichkeit für wenigstens einige der Begriffe;
Multiplizieren der Beitragsbewertungen für jeden der wenigstens einigen Begriffe mit der Wahrscheinlichkeit des Begriffs; und
Einstufen aller Beiträge durch die multiplizierten Beitragsbewertungen, wobei die vorgegebene Rangstufe die Bewertung des Dokuments M ab der Spitze der Rangordnung umfasst.

11. Verfahren nach einem der Ansprüche 7 bis 10, das Folgendes umfasst:

Übertragen des Index nach dem Bereinigen von einem Rechner mit einer großen Speicherkapazität an eine Einheit mit begrenzter Speicherkapazität.

12. Verfahren nach Anspruch 11, wobei die Einheit mit begrenzter Speicherkapazität eine tragbare Datenverarbeitungseinheit umfasst.

13. Computerprogramm, das ein Computerprogrammcode-Mittel umfasst, das zum Ausführen des Verfahrens nach einem der Ansprüche 7 bis 12 geeignet ist, wenn das Programm auf einem Computer ausgeführt wird.


**Revendications**

1. Dispositif pour indexer un corpus de documents textuels (14), le dispositif comprenant un processeur d'index qui est agencé afin de :

créer un index inversé d'entrées pour des termes apparaissant dans la pluralité de documents, chaque entrée incluant un terme présent dans un ou plusieurs des documents et au moins un enregistrement de document, chaque enregistrement de document comprenant un identifiant d'un document contenant le terme et un classement qui représente un rang du terme dans le document (46, 50) ; et
compresser l'index inversé en supprimant un enregistrement de document ayant un classement inférieur à un niveau donné dans le classement (52, 54), **caractérisé en ce que** le processeur est agencé afin de sélectionner les enregistrements à élaguer sur la base de l'information relative à une distribution statistique des interrogations dans un espace de recherche concernant les enregistrements de document.

2. Dispositif selon la revendication 1, **caractérisé en outre par** une interface d'utilisateur pour recevoir au moins un paramètre, dans lequel le processeur est agencé afin de régler le niveau donné sur la base du paramètre et du classement d'index.

3. Dispositif selon la revendication 2, dans lequel au moins un paramètre comprend un nombre M de résultats à conserver dans l'index inversé élagué.

4. Dispositif selon la revendication 3, dans lequel le processeur est agencé afin de déterminer une probabilité d'au moins certains des termes et de multiplier les résultats d'enregistrement pour chacun de au moins certains des termes par la probabilité du terme, et de classer tous les enregistrements selon les résultats d'enregistrement multipliés, et dans lequel le niveau donné comprend le résultat du document M à partir du sommet du classement.

**5.** Dispositif selon l'une quelconque des revendications précédentes, dans lequel le processeur d'index comprend un ordinateur ayant une grande capacité de mémoire, et comprenant un dispositif pour transférer l'index après élagage à une unité avec capacité de mémoire limitée.

**6.** Dispositif selon la revendication 5, dans lequel l'unité avec capacité de mémoire limitée comprend une unité informatique portable.

**7.** Procédé d'indexage d'un corpus de documents textuels (14), le procédé comprenant les étapes consistant à :

créer un index inversé d'entrées pour des termes apparaissant dans la pluralité de documents, chaque entrée incluant un terme présent dans un ou plusieurs des documents et au moins un enregistrement de document, chaque enregistrement de document comprenant un identifiant d'un document contenant le terme et un classement qui représente un rang du terme dans le document (46,50) ; et
compresser l'index inversé en supprimant un enregistrement de document ayant un classement inférieur à un niveau donné dans le classement (52,54), **caractérisé en ce que** le processeur est agencé afin de sélectionner les enregistrements à élaguer sur la base de l'information relative à une distribution statistique des interrogations dans un espace de recherche concernant les enregistrements de document.

**8.** Procédé selon la revendication 7, **caractérisé en outre par** une étape de réception d'au moins un paramètre et de réglage du niveau donné sur la base du paramètre et du classement d'index.

**9.** Procédé selon la revendication 8, dans lequel au moins un paramètre comprend un nombre M de résultats à conserver dans l'index inversé élagué.

**10.** Procédé selon la revendication 9, comprenant de :

déterminer une probabilité d'au moins certains des termes ;
multiplier les résultats d'enregistrement pour chacun d'au moins certains des termes par la probabilité du terme ; et
classer tous les enregistrements selon les résultats d'enregistrement multipliés, et dans lequel le niveau donné comprend le résultat du document M à partir du sommet du classement.

**11.** Procédé selon une quelconque des revendications 7 à 10, comprenant de :

transférer l'index après élagage depuis un ordinateur ayant une grande capacité de mémoire à une unité avec capacité de mémoire limitée.

**12.** Procédé selon la revendication 11, dans lequel l'unité avec capacité de mémoire limitée comprend une unité informatique portable.

**13.** Programme informatique comprenant des moyens de code de programme adaptés afin de mettre en oeuvre le procédé selon l'une quelconque des revendications 7 à 12 quand ledit programme est exécuté sur un ordinateur.

**Fig. 1**

EP 1 346 296 B1

```
                    ┌─────────────────┐
                    │  Add Document(s) │──⌐44
                    │   To Archive    │
                    └─────────────────┘
                            │
                            ▼
                    ┌─────────────────┐
                    │ Prepare Initial │──⌐46
                    │    Index A      │
                    └─────────────────┘
                            │
                            ▼
┌─────────────────┐    ┌─────────────────┐
│  Input Pruning  │──▶ │  Rank Postings  │──⌐50
│   Parameters    │    │      In A       │
└─────────────────┘    └─────────────────┘
        48                      │
                                ▼
                    ┌─────────────────┐
                    │ Remove Postings │──⌐52
                    │Below Cutoff Level│
                    └─────────────────┘
                            │
                            ▼
                    ┌─────────────────┐
                    │ Save Compressed │──⌐54
                    │  Form Of A*     │
                    └─────────────────┘
```

## Fig. 2

48

```
┌─────────────────┐              ┌─────────────────┐
│Input Distribution│             │    Input M      │──⌐58
│     DistQ       │              └─────────────────┘
└─────────────────┘                      │
        56                               │
        │                                │
        ▼                                │
┌─────────────────┐                      │
│ Determine DistT │                      │
│   From DistQ    │                      │
└─────────────────┘                      │
        60                               │
        │                                │
        ▼                                │
    To Step 50  ◀─────────────────────────┘
```

## Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9749048 A

**Non-patent literature cited in the description**

- **MAAREK ; SMADJA.** Full text indexing based on lexical relations, an application: Software libraries. *Proceedings of the Twelfth Annual International ACM SIGIR Conference on Research and Development in Information Retrieval,* 1989, 198-206
- **SALTON ; MCGILL.** An Introduction to Modern Information Retrieval. McGraw-Hill, 1983
- **CHRIS BUCKLEY et al.** New retrieval approaches using SMART: TREC 4. *Proceedings of the Fourth Text Retrieval Conference (TREC- 4),* November 1995, 25-48
- **WITTEN et al.** Managing Gigabytes. Morgan Kaufman Publishers, 1999
- **DEERWEESTER et al.** Indexing by Latent Semantic Analysis. *Journal of the American Society for Information Science,* 1990, vol. 41 (1), 391-407
- **PERSIN.** Document Filtering for Fast Ranking. *Proceedings of the 17th Annual International ACM-SIGIR Conference on Research and Development in Information Retrieval,* July 1994, 339-348
- **DAVID MAWKING.** Efficiency/Effectiveness Trade-offs in Query Processing. *Prative workshop, 1998 SIGIR conf.,* 31 October 1998, 16-22